**Europäisches Patentamt**

**European Patent Office**

**Office européen des brevets**

(11) Publication number: **0 083 112**
**B1**

## (12) EUROPEAN PATENT SPECIFICATION

(45) Date of publication of patent specification: **08.06.88**

(21) Application number: **82112093.8**

(22) Date of filing: **29.12.82**

(51) Int. Cl.⁴: **A 44 B 19/52, A 44 B 19/58**

(54) An apparatus and a method for forming space sections in a slide fastener chain having coupling elements in the form of continuous coil.

(30) Priority: **29.12.81 JP 197537/81 u**

(43) Date of publication of application:
**06.07.83 Bulletin 83/27**

(45) Publication of the grant of the patent:
**08.06.88 Bulletin 88/23**

(84) Designated Contracting States:
**BE DE FR IT NL**

(56) References cited:
**FR-A-1 539 144**
**GB-A-1 078 509**
**GB-A-2 074 923**
**US-A-2 877 844**
**US-A-3 128 543**
**US-A-4 131 223**

(73) Proprietor: **YOSHIDA KOGYO K.K.**
**No. 1 Kanda Izumi-cho Chiyoda-ku**
**Tokyo (JP)**

(72) Inventor: **Matsumoto, Masao**
**192-1, Aramata**
**Kurobe-shi Toyama-ken (JP)**
Inventor: **Imai, Shigeru**
**102, Tabayashi**
**Namerikawa-shi Toyama-ken (JP)**

(74) Representative: **Patentanwälte Leinweber &**
**Zimmermann**
**Rosental 7/II Aufg.**
**D-8000 München 2 (DE)**

EP 0 083 112 B1

Courier Press, Leamington Spa, England.

## Description

The present invention relates to a method for forming space sections devoid of coupling elements having a predetermined length in an elongate slide fastener chain having a pair of interengaged coupling elements in the form of continuous coil secured to a pair of fastener tapes by sewing threads, the method comprising the steps of: supporting the slide fastener chain horizontally; cutting one of the leg portions of the interengaged coupling elements to separate the coupling elements into the individual dismembered coil fragments; pressing from the other leg portion side the coupling elements adjacent to the interengaging head portions and holding each of the dismembered coil fragments at the confronting upper and lower leg portions adjacent the interengaging head portions; and removing the cut and dismembered coil fragments from the sewing threads by moving the coil fragments perpendicularly to the slide fastener plane with their cut leg portions directed in the direction of movement.

The present invention further relates to an apparatus for carrying out such a method, said apparatus comprising: die means confronting the fastener tapes for supporting the slide fastener chain horizontally; punch means disposed on the coupling elements side and being reciprocably movable toward the coupling element; ejector means disposed in the die means reciprocably movable toward the punch means, said punch means being upwardly movable in response to the upward movement of the ejector means; and means for holding the pair of fastener tapes.

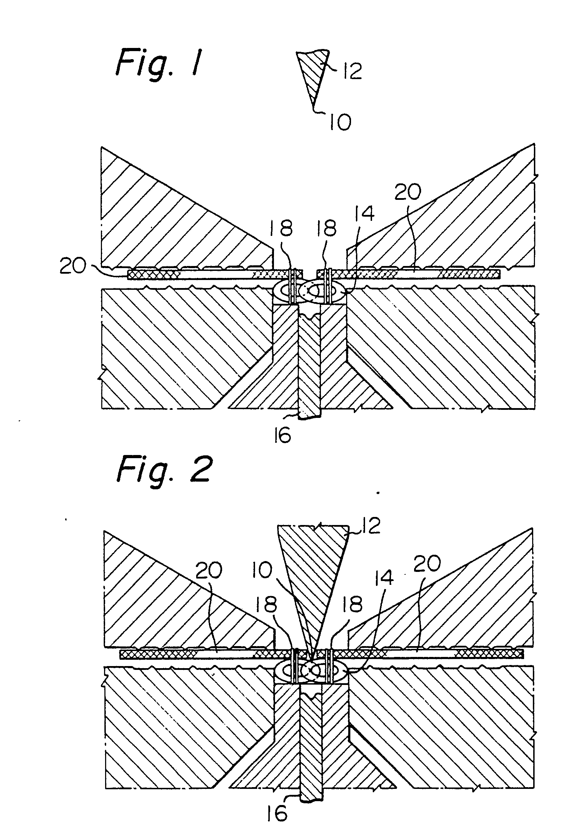

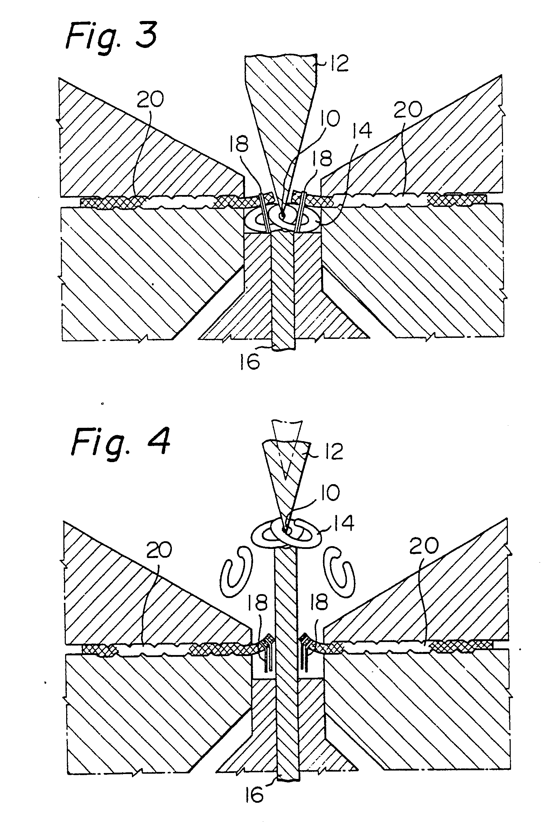

A method and an apparatus of the type mentioned above is disclosed in GB—A—2 074 923. In this prior art apparatus, as shown in Figs. 1 to 4, the slide fastener chain is supported on the die 21 so that the interengaged coupling elements occupy the lower position. The punch 12 having a cutting edge 10 is lowered from the upper position or from the fastener tape side to the interengaged coupling elements 14 through the space between the opposite fastener tapes 20 so that the cutting edge 10 merely cuts the lower leg portion of the interengaged coupling elements 14 on the interengaging head portion side of the sewing thread 18. Then, the ejector 16 is elevated from the coupling element side toward the upper leg portion of the coupling elements 14 so that the interengaged portion of the interengaged coupling elements 14 is held between the cutting edge 10 and the ejector 16. After that, the ejector 16 and punch 12 are elevated synchronously while holding the interengaged coupling elements 14 therebetween so that the coupling elements 14 are pulled away from or removed from the sewing thread 18, and thus from the fastener tapes 20. However, in this prior apparatus, the coupling elements 14 are not pulled away from the sewing thread 18 and remain on the fastener tape 20 if the grip of the coupling elements 14 by the punch 12 and the ejector 16 is insufficient or loose, or the sewing thread 18 is broken due to the excessive force for pulling the coupling elements 14 away from the sewing thread 18 if the grip of the coupling elements 14 is too tight, since (i) only the lower leg portion of the coupling element 14 is cut off, and its cut position is on the interengaging head portion side of the sewing thread 18, (ii) the coupling elements 14 cut off at the lower leg portion are gripped on the interengaging head portion side of the sewing thread 18, pulled away from the sewing thread 18 and removed from the fastener tape 20, and (iii) the coupling elements 14 are attached firmly to the fastener tape 20.

US—A—3 128 543 discloses a method quite similar to that of GB—A—2 074 923 except that the cut coil fragments are moved perpendicularly to the slide fastener plane with their cut leg portions directed against the direction of movement.

US—A—4 131 223 and FR—A—1 539 144 disclose methods for forming space sections in a slide fastener chain comprising the step of cutting the upper and the lower leg portions of the interengaged coupling elements. These prior art methods suffer from the difficulty to prevent the stringer tapes from being hurt by the cooperating punch and die means.

The present invention has for its object the provision of a method and of an apparatus of the type mentioned above for reliably pulling away the dismembered coil fragments from the sewing threads without failure or without breaking the sewing threads.

A method satisfying these requirements and an apparatus for carrying out this method are characterized in claims 1 and 2, respectively.

In the apparatus according to the present invention the upper leg portion of the interengaged coupling element is cut at the connecting reversed portion side of the sewing thread over a distance corresponding to the space section devoid of the coupling elements by the pair of cutting edges whose longitudinal length is selected to be equivalent to the space section. That portion of the coupling elements which is cut by the cutting edges or the dismembered coil fragments are then securely held along their interengaged portion or over a portion inside the sewing threads by the gripping projection of the punch in conjunction with the ejector. The coupling elements are made of synthetic resin, and because of their elasticity the dismembered coil fragments are suitably flattened by the gripping projection of the punch and the ejector to that they are released of the clinching tension of the sewing thread and get loose enough to be pulled out easily without significant resistance to their further upward or downward movement in synchronism with the fragments held between the punch and the ejector.

It will be easily understood from the above that removal of the dismembered coil fragments from their sewing threads can readily and perfectly be achieved without failure or without breaking the sewing threads to thereby provide the space sections of required span devoid of coupling elements at intervals in the slide fastener chain.

Operation of the apparatus for forming space sections constructed in accordance with the present invention will be described in more detail in conjunction with the drawings.

Brief Description of the Drawings

Figs. 1 to 4 are cross-sectional views of a conventional apparatus for forming space sections in different modes of operation,

Figs. 5 to 8 are cross-sectional views of an embodiment of the apparatus, according to the invention, for forming space sections in different modes of operation.

Description of the Preferred Embodiments

Referring to the drawings, a slide fastener chain comprises a pair of fastener tapes 24, 24 and a pair of continuous coupling elements 34, 34, each of the coupling elements 34, 34 being attached along each edge of the fastener tapes 24, 24 by a sewing thread 32 and interengaged with the other coupling element 34. The coupling elements 34, 34 are continuous spiral coil coupling elements of synthetic resin. Each of the coupling elements 34, 34 comprises an interengaging head portion, a pair of upper and lower leg portions and a connecting reversed portion and the sewing thread 32 passes through the fastener tape 24 at the places between each pair of loops of the coupling elements 34, 34.

The numerals 21 and 22 designate a die for supporting the slide fastener chain in horizontal condition thereon and a punch reciprocably disposed in the apparatus for forming space sections. Integrally connected to the punch 22 at its bottom end is a cutter comprising a pair of cutting edges 26 and 28 disposed substantially parallel with one another each having a blade length corresponding to the space sections of required span to be formed on each train of coupling elements 34, 34 attached by the sewing threads 32 to the fastener tape 24 along its longitudinal edge. A gripping projection 30 is also provided on the bottom end of the punch 22 and extends in parallel with and centrally between the paired cutting edges 26 and 28. The cutting edges 26 and 28 are spaced far enough apart from each other to perform cutting on the trains of coupling elements 34, 34 at either side of point 34a beyond or outside of the sewing thread 32 that secures each of the coupling elements 34, 34 to the corresponding edge of the fastener tape 24. The gripping projection 30 is provided to seize or hold the portion of the coupling element trains which is to be cut by the cutting edges 26 and 28 along the integrated portion in conjunction with an ejector 36 to be described in detail later. This gripping projection 30 is designed to protrude from the punch 22 high enough to press the upper leg portion adjacent to the interengaged interengaging head portions of the coupling elements 34, 34 and flatten the dismembered coil fragments, cut off by the cutting edges 26 and 28, so as to release them of the clasping force of the sewing thread 32 which might otherwise continue to tightly fasten these dismembered fragments to their tape edges. The gripping projection 30 may typically be of isosceles trapezoidal shape.

The ejector 36 is positioned opposite the punch 22 and is reciprocably disposed for vertical movement in the stationary die 21. This ejector 36 ascends toward and presses against the gripping projection 30 of the punch 22, immediately after the cutting edges 26 and 28 have cut the train of coupling element 34 of the fastener tape 24. Then the gripping projection 30 flattens the dismembered coil fragments and holds them in conjunction with the ejector 36 securely so that these dismembered coil fragments are released of the clinching tension of the sewing thread 32. Further, the punch 22 ascends in response to the upward movement of the ejector 36 while the predetermined span of the dismembered coil fragments is held by the ejector 36 and the gripping projection 30 of the punch 22 with each fragment being pressed and flattened. In the manner described above, the coupling elements cut off or dismembered coil fragments are removed from the sewing thread 32 and therefore from the fastener tape 24 easily.

Then the ejector 36 retracts to its original neutral position in the die 21 allowing these freed fragments to fall or to be disposed in a suitable manner.

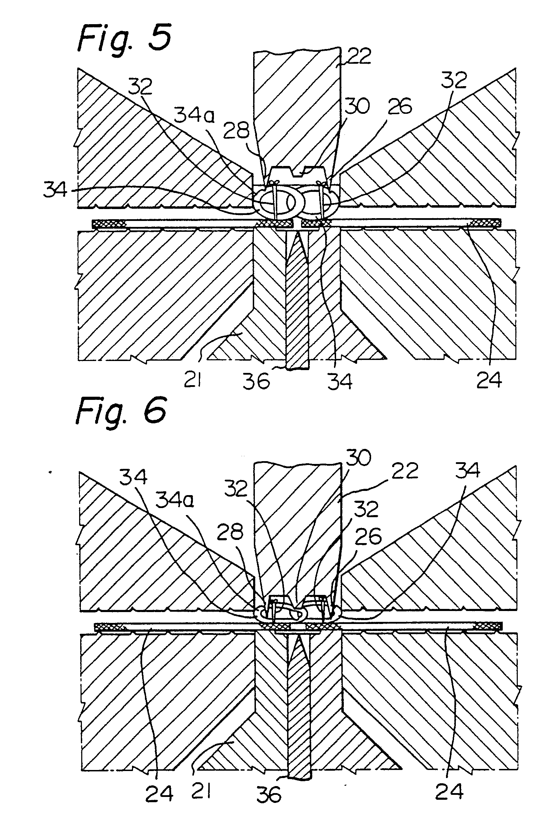

Now according to Figs. 5 to 8, which are views of the position of the principal parts at points during a normal operation, different modes of the operation will be described in full detail to give a clear idea of the mechanism of the present invention.

Fig. 5 depicts the first mode of operation where the punch 22 having at the lower end thereof a pair of parallel cutting edges 26 and 28 apart from each other descends from its upper position toward the fastener chain supported horizontally on the die 21 so that the interengaged coupling elements 34, 34 begin to cut at each of the outer sides or the connecting reversed portion sides 34a of the sewing thread 32 by the cutting edge 26 or 28.

Fig. 6 illustrates the second mode of operation where the punch 22 has reached its bottom dead end of stroke after the trains of coupling element 34 have been cut over the space section of required span at a point 34a beyond the sewing thread 32. The blade length of each of the cutting edges 26 and 28 is selected to cut the corresponding train of coupling element 34 over a length equivalent to the space section of required span into a certain number of dismembered coil loops generally elliptical in shape, each loop cut at one point by the cutting edge. At this time, the gripping projection 30 of the punch 22 centrally disposed between the pair of the cutting edges 26 and 28 presses the point adjacent the interengaging head portion of the coupling elements 34, 34 which have been cut off at the upper leg portions or the upper leg portion at the interengaging head portion side of the sewing thread 32 and flattens each of the dismembered coil fragments. Thereby, the flattened dismembered coil fragments or spiral coil loops get loose within the sewing threads 32.

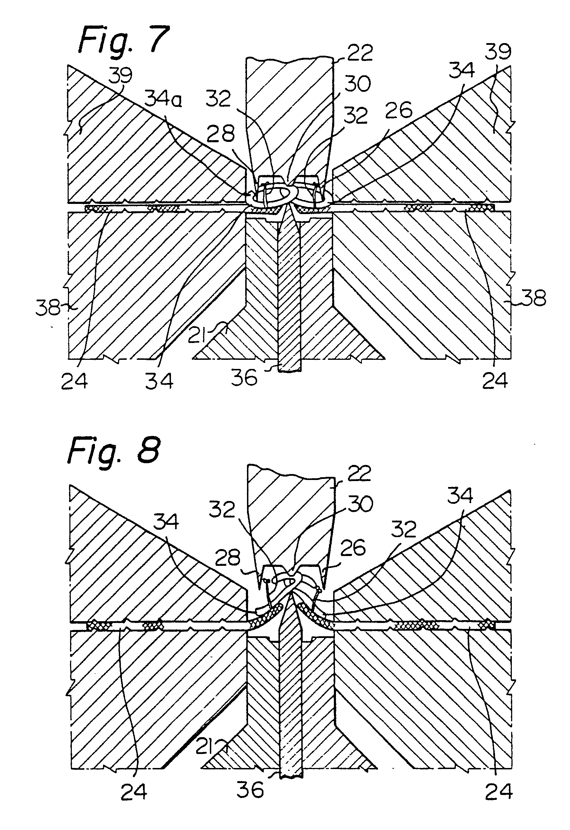

Fig. 7 shows the third mode of operation where the ejector 36 that is reciprocably disposed in the die 21 directly below the gripping projection 30 of the punch 22 moves upward to interpose the dismembered coil fragments between it and the gripping projection 30 to further flatten them. The paired fastener tapes 24 from which these dismembered coil fragments are separated are held stationary in a well known manner by a suitable mechanical holding means of the apparatus for forming the space sections. In this embodiment, the lower holding means 38 ascend in response to the upward movement of the ejector 36 and the elevation thereof stops at the point where the fastener tape 24, 24 are hold by it in conjunction with the associated upper holding means 39.

Fig. 8 is a view representing the fourth mode of operation where the punch 22 moves upwardly in response to the upward movement of the ejector 36 with the cut and flattened coupling elements held therebetween so as to draw the loops away from the sewing thread 32. During this operation, the fastener tapes 24, 24 are held by the suitable holding means 38, 39. After the ejector 36 has reached its top dead end where cut and flattened coupling elements are able to be completely cleared off of the sewing thread, it retracts to its original position in the die 21 for the subsequent cycle of operation allowing the released dismembered coil fragments to fall or to be disposed in a suitable member.

From the above description it will be appreciated that the present invention fully achieves its objects of drawing the dismembered coil fragments from the sewing threads without failure or without breaking the thread, contributing much to increasing productivity.

It is to be understood that the invention is not limited to the precise construction shown in the attached drawings and described in the specification, but that changes are contemplated that readily fall within the scope of the appended claims.

## Claims

1. A method for forming space sections devoid of coupling elements having a predetermined length in an elongate slide fastener chain having a pair of interengaged coupling elements (34) in the form of continuous coils secured to a pair of fastener tapes (24) by sewing threads (32), the method comprising the steps of:

supporting the slide fastener chain horizontally;

cutting one of the leg portions of the interengaged coupling elements (34) to separate the coupling elements (34) into the individual dismembered coil fragments;

pressing from the other leg portion side the coupling elements (34) adjacent to the interengaging head portions and holding each of the dismembered coil fragments at the confronting upper and lower leg portions adjacent the interengaging head portions; and

removing the cut and dismembered coil fragments from the sewing threads (32) by moving the coil fragments perpendicularly to the slide fastener plane with their cut leg portions directed in the direction of movement, characterized by

cutting the upper leg portions of the interengaged coupling elements (34) at each of the connecting reversed portion side of the sewing threads (32) and thereafter

pressing the upper leg portions adjacent to the interengaging head portions of the coupling elements (34) to flatten the dismembered coil fragments and to release them from the clinching tension of the sewing threads (32).

2. An apparatus for carrying out the method set forth in claim 1, said apparatus comprising:

die means (21) confronting the fastener tapes (24) for supporting the slide fastener chain horizontally;

punch means (22) disposed on the coupling elements side and being reciprocably movable toward the coupling element (34);

ejector means (36) disposed in the die means (21) reciprocably movable toward the punch means (22), said punch means (22) being upwardly movable in response to the upward movement of the ejector means (36); and

means (38, 39) for holding the pair of fastener tapes, characterized in that

said punch means (22) has at the end surface a pair of laterally spaced apart cutting edges (26, 28) for cutting the upper leg portion of the pair of interengaged coupling elements (34) at the connecting reversed portion side of the sewing thread (32) and a gripping projection (30) disposed centrally between the pair of the cutting edges (26, 28) for pressing the upper leg portions adjacent the interengaging head portions of the interengaged coupling elements (34), the upper leg portions adjacent to the interengaging head portions of the interengaged coupling elements (34) being gripped between the edge of the ejector means (36 and the gripping projection (30) of the punch means (22) during the upward movement thereof.

3. An apparatus as set forth in claim 2, wherein the cutting edges (26, 28) extend beyond the gripping projection (30).

## Patentansprüche

1. Verfahren zur Erzeugung kuppelgliederfreier Bereiche einer bestimmten Länge in einer Reißverschlußkette, die paarweise gekuppelte Kuppelglieder (34) in Form fortlaufender Schraubenwendeln aufweist, die mit Nähfäden (32) an zwei Tragbändern (24) befestigt sind, mit den Schritten:

Abstützen der Reißverschlußkette in horizontaler Lage;

Durchtrennen eines Schenkels der gekuppelten Kuppelglieder (34), um die Kuppelglieder (34) in einzelne Windungsfragmente zu unterteilen;

Ausüben einer Druckkraft auf den anderen Schenkel der Kuppelglieder (34) neben den gekuppelten Kupplungsköpfen und Festhalten eines jeden zerschnittenen Windungsfragments an den gegenüberliegenden oberen und unteren Schenkeln neben den gekuppelten Kupplungsköpfen; und

Beseitigen der durchtrennten und zerschnittenen Windungsfragmente von den Nähfäden (32), indem die Windungsfragmente rechtwinklung zu der Reißverschlußebene bewegt werden, wobei ihre durchtrennten Schenkel in die Bewegungsrichtung weisen, gekennzeichnet durch

Durchtrennen der oberen Schenkel der gekuppelten Kuppelglieder (34) in jedem Verbindungsbereich auf der von den Nähfäden (32) abgekehrten Seite und sodann.

Ausüben einer Druckkraft auf die oberen Schenkel neben den gekuppelten Kupplungsköpfen der Kuppelglieder (34), um die zerschnittenen Windungsfragmente abzuflachen und von der Klemmspannung der Nähfäden (32) zu befreien.

2. Vorrichtung zur Durchführung des Verfahrens nach Anspruch 1 mit:

einem Gesenk (21), das den Tragbändern (24) zugekehrt ist, um die Reißverschlußkette horizontal abzustützen;

einem Stanzstempel (22), der auf der Seite der Kuppelglieder (34) angeordnet und gegenüber diesen hin- und herbewegbar ist;

einem Auswerfer (36), der in dem Gesenk (21) angeordnet und gegenüber dem Stanzstempel (22) hin- und herbewegbar ist, wobei der Stanzstempel (22) bei einer Aufwärtsbewegung des Auswerfers (36) aufwärts bewegbar ist; und

einer Einrichtung (38, 39) zum Festhalten der beiden Tragbänder,

dadurch gekennzeichnet,

daß der Stanzstempel (22) an der Endfläche zwei im seitlichen Abstand voneinander angeordnete Schneidkanten (26, 28) aufweist, um die oberen Schenkel der paarweise gekuppelten Kuppelglieder (34) im Verbindungsbereich auf der von den Nähfäden (32) abgekehrten Seite zu durchtrennen, und einen Greifvorsprung (30) aufweist, der mittig zwischen den beiden Schneidkanten (26, 28) angeordnet ist, um die oberen Schenkel neben den gekuppelten Kupplungsköpfen der gekuppelten Kuppelglieder (34) zu belasten, wobei die oberen Schenkel neben den gekuppelten Kupplungsköpfen der gekuppelten Kuppelglieder (34) zwischen der Kante des Auswerfers (36) und dem Greifvorsprung (30) des Stanzstempels (22) während der Aufwärtsbewegung desselben erfaßt werden.

3. Vorrichtung nach Anspruch 2, wobei die Schneidkanten (26, 28) über den Greifvorsprung (30) hinausragen.

**Revendications**

1. Procédé pour former des espaces dépourvus d'éléments d'accouplement de longueur prédéterminée dans une chaîne allongée de fermeture à glissière comportant une paire d'éléments d'accouplement (34) en prise l'une avec l'autre, sous la forme d'hélices continues fixées à une paire de rubans (24) de fermeture à glissière par des fils à coudre (32), ce procédé comprenant les étapes consistant:

à soutenir en position horizontale la chaîne de fermeture à glissière;

à sectionner une des branches des éléments d'accouplement (34) en prise l'un avec l'autre pour séparer ces éléments d'accouplement (34) en fragments individuels d'hélice écartelés;

à exercer à partir du côté de l'autre branche une pression sur les éléments d'accouplement (34) en un point contigu aux têtes en prise l'un avec l'autre et à supporter chacun des fragments d'hélice écartelés à l'endroit des branches supérieure et inférieure se faisant face et en un point contigu aux têtes en prise les unes avec les autres; et

à éjecter les fragments d'hélice sectionnés et écartelés hors des fils à coudre (32) en expulsant les fragments d'hélice perpendiculairement au plan de la fermeture à glissière avec leurs branches sectionnées orientées dans la direction du déplacement,

caractérisé par le fait que:

on sectionne les branches supérieures des éléments d'accouplement (34) en prise les uns avec les autres sur chacun des côtés de parties opposées de fixation des fils à coudre (32) et, ensuite,

on presse les branches supérieures contiguës aux têtes, en prise les unes avec les autres, des éléments d'accouplement (34) pour aplatir les fragments d'hélice écartelés et pour les libérer de la tension de fixation des fils à coudre (32).

2. Appareil pour mettre en oeuvre le procédé selon la revendication 1, cet appareil comprenant:

une matrice (21) placée en face des rubans (24) de fermeture à glissière pour supporter horizontalement la chaîne de fermeture à glissière;

un poinçon (22) disposé du côté des éléments d'accouplement et animé d'un mouvement de va-et-vient en direction des éléments d'accouplement (34);

un éjecteur (36) logé dans la matrice (21) et animé d'un mouvement de va-et-vient en direction du poinçon (22), ce poinçon (22) pouvant être déplacé vers le haut en réponse au déplacement ascendant de l'éjecteur (36); et

un moyen (38, 39) pour maintenir la paire de rubans de fermeture à glissière,

caractérisé par le fait que:

le poinçon (22) comporte sur sa face d'extrémité une paire de bords tranchants, espacés l'un de l'autre, pour sectionner la branche supérieure des deux éléments d'accouplement (34), en prise l'un avec l'autre, sur le côté des parties opposées de fixation du fil à coudre (32) et une saillie de serrage (30) disposée centralement entre la paire de bords tranchants (26, 28) pour comprimer les branches supérieures contiguës aux têtes, en prise les unes avec les autres, des éléments d'accouplement (34) en prise les uns avec les autres, les branches supérieures contiguës aux têtes, en prise les unes avec les autres, des éléments d'accouplement (34) en prise les uns avec les autres, étant serrées entre le bord de l'éjecteur (36) et la saillie de serrage (30) du poinçon (22) pendant le déplacement ascendant de celui-ci.

3. Appareil selon la revendication 2, dans lequel les bords tranchants (26, 28) s'étendent au-delà de la saillie de serrage (30).

## Fig. 1

12

10

20
18  18  14  20

16

## Fig. 2

20  10  14  20
18  18  12

16

*Fig. 3*

12

20

10

14

20

18

18

16

*Fig. 4*

12

10

14

20

20

18

18

16

Fig. 5

Fig. 6

Fig. 7

Fig. 8